# EUROPÄISCHE PATENTSCHRIFT

(11) **EP 1 736 675 B1**
(45) Veröffentlichungstag und Bekanntmachung des Hinweises auf die Patenterteilung: **19.03.2008**
(21) Anmeldenummer: 05013555.7
(22) Anmeldetag: 23.06.2005
(51) Int. Cl.: F16C 29/06, B23Q 1/26

(54) **Linearbewegungsvorrichtung mit RFID-Tag**
Linear motion device with RFID tag
Dispositif a déplacement linéaire avec étiquette d'identification par radio-fréquence

(43) Veröffentlichungstag der Anmeldung: 27.12.2006
(73) Patentinhaber: Bosch Rexroth Mechatronics GmbH, 97424 Schweinfurt (DE)
(72) Erfinder: Greubel, Roland, Dipl.-Ing., 97729 Ramsthal (DE)

(56) Entgegenhaltungen:
- EP-A- 0 971 140
- WO-A-20/04072747
- WO-A-20/05052397
- WO-A-20/05052398
- US-A1- 2002 186 134
- PATENT ABSTRACTS OF JAPAN Bd. 2003, Nr. 12, 5. Dezember 2003 (2003-12-05) -& JP 2005 042895 A (NSK LTD), 17. Februar 2005 (2005-02-17)
- PATENT ABSTRACTS OF JAPAN Bd. 2003, Nr. 12, 5. Dezember 2003 (2003-12-05) -& JP 2005 140606 A (NSK LTD), 2. Juni 2005 (2005-06-02)

## Beschreibung

Die Erfindung betrifft eine Linearbewegungsvorrichtung gemäß dem Oberbegriff von Anspruch 1. Solche Linearbewegungsvorrichtungen sind insbesondere Wälzkörpergewindetriebe und Linearwälzlager wie Kugelbüchsen, Kugel- und Rollenschienenführungen sowie Ballsplines.

Derartige Linearbewegungsvorrichtungen sind aus dem Stand der Technik bekannt und finden beispielsweise in Werkzeugmaschinen breite Anwendung. Üblicherweise sind diese Vorrichtungen mit Beschriftungen wie Typ, Seriennummer, Genauigkeitsklasse und Herstellungsdatum versehen. In neuerer Zeit besteht die Forderung derartige Beschriftungen computerlesbar zu gestalten, damit sie z.B. bei der Lagerhaltung automatisch erfasst werden können. Für diesen Zweck werden heute bereits Strichcodes verwendet.

Weiter sind aus dem Stand der Technik sogenannte RFID-Tags (radio frequency identification) bekannt. Derartige Tags können mit Hilfe von elektromagnetischen Wellen berührungslos ausgelesen werden. Sie benötigen üblicherweise keine Energiespeicher, da sie beim Auslesen ebenfalls mittels elektromagnetischer Wellen von außen mit Energie versorgt werden. Diese Tags haben gegenüber Strichcodes den Vorteil, dass sie mehr Daten speichern können und dass sie auch über größere Entfernungen und ohne Sichtkontakt ausgelesen werden können. Oft ist in einem RFID-Tag auch eine Datenverarbeitungseinheit vorgesehen, beispielsweise um die gespeicherten Daten mit Verschlüsselungsverfahren gegen unbefugtes Auslesen zu sichern.

In Werkzeugmaschinen werden RFID-Tags gemäß der EP 1 339 014 A1 oder der EP 0 155 662 A2 an Werkzeugen angebracht, damit die Maschinensteuerung die darin gespeicherten tatsächlichen Werkzeugabmessungen bei der Steuerung der Werkzeugbahn berücksichtigen kann. Die entsprechenden Tags werden beispielsweise von der Fa. Balluff unter der Bezeichnung "Informations-System BIS C" am Markt angeboten und zeichnen sich durch eine hohe Schutzart von IP67 nach IEC 60529 aus, d.h. die Tags an sich sind gegen die besonderen Beanspruchungen in einer Werkzeugmaschine durch Kühlschmiermittel, Späne usw. besonders gut geschützt und daher relativ teuer.

Gleichzeitig sind beispielsweise aus der US 6,424,263 B1 sehr billige aber nahezu ungeschützte RFID-Tags bekannt, die zukünftig im Einzelhandel die heutigen Preisaufkleber ersetzen sollen. Bei diesen Tags werden der entsprechende Siliziumchip und die zugehörige Antenne von einer Kunststofffolie getragen, die auf das zu kennzeichnende Produkt von außen aufgeklebt werden kann. Die Antenne wird häufig mit einem Druckverfahren auf die Trägerfolie aufgebracht. Darüber hinaus wird bereits daran gearbeitet, den Siliziumchip durch eine Schaltung aus organischen Halbleitern zu ersetzen, die ebenfalls mit einem Druckverfahren auf die Trägerfolie aufgebracht werden kann. Derartige nahezu ungeschützte Tags würden aber bei Verwendung in einer Werkzeugmaschine nach kurzer Zeit zerstört werden.

Es ist daher Aufgabe der Erfindung ein RFID-Tag an einer Linearbewegungsvorrichtung geschützt und gleichzeitig kostengünstig anzubringen ohne die Funktion des RFID-Tags zu beeinträchtigen. Diese Aufgabe wird dadurch gelöst, dass das elektrisch nicht leitende Führungsbauteil mit einem RFID-Tag versehen ist, wobei das RFID-Tag von außen her nicht zugänglich ist. Der Tragkörper einer Linearbewegungsführung, an dem sich die Wälzkörper ggf. über Laufbahneinlagen lastübertragend abstützen, besteht häufig aus Stahl und ist somit elektrisch leitend. Ein RFID-Tag würde somit nicht funktionieren, wenn man es in einem Hohlraum des Tragkörpers anordnen würde, weil der Stahl die elektromagnetischen Wellen beim Auslesen abschirmen würde. Bei einer Anordnung an der Oberfläche des Tragkörpers wäre das Tag nicht geschützt oder müsste aufwändig mit gesonderten Abdeckungen geschützt werden.

Im Gegensatz dazu stellen die Führungsteile für die Wälzkörper einen idealen Ort da, um ein RFID-Tag geschützt unterzubringen. Die Führungsteile, die bei einem Linearwälzlager beispielsweise von den Endkappen oder bei einem Kugelgewindetrieb beispielsweise von den Umlenkstücken gebildet werden, sind üblicherweise aus Kunststoff spritzgegossen und somit elektrisch nicht leitend. Die elektromagnetischen Wellen beim Auslesen können das Führungsteil somit ungehindert durchdringen und das RFID-Tag erreichen. Gleichzeitig ist es beim Kunststoffspritzgießen mit geringsten Mehrkosten möglich, in dem Führungsteil einen entsprechenden Aufnahmeraum für das RFID-Tag vorzusehen. Hierbei ist zu berücksichtigen, dass das RFID-Tag sehr klein ist. Es kommen somit auch kleine Führungsbauteile wie Umlenkstücke und schlanke Führungsleisten für den Einbau in Frage.

Gemäß einer bevorzugten Ausführungsform kann das RFID-Tag zwischen dem Führungsbauteil und dem Tragkörper angeordnet sein. Ein Hohlraum für das RFID-Tag im Führungsbauteil in Form einer Ausnehmung kann somit ohne zusätzlichen Aufwand durch den Tragkörper verschlossen werden, wodurch das Tag gegen Umwelteinflüsse geschützt ist. Hierfür ist es notwendig, dass die RFID-Tag-Ausnehmung auf einer dem Tragkörper zugewandten Seite des Führungsbauteils angeordnet ist. Die abschirmende Wirkung des Tragkörpers in Bezug auf die elektromagnetischen Wellen beim Auslesen des Tags kann in Kauf genommen werden, da sich diese Wellen durch Beugungs- und Reflektionseffekte trotzdem in den abgeschatteten Bereich hinein ausbreiten.

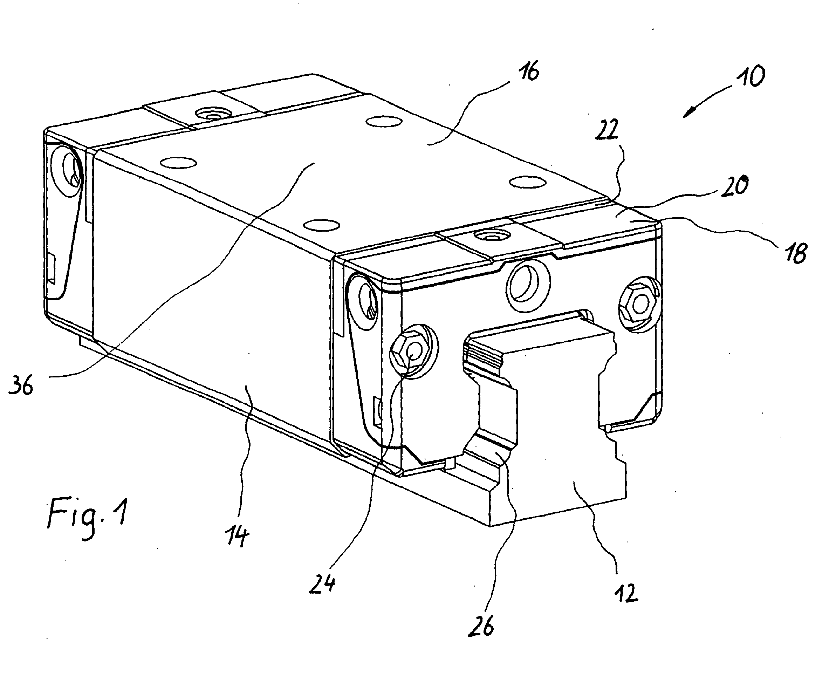

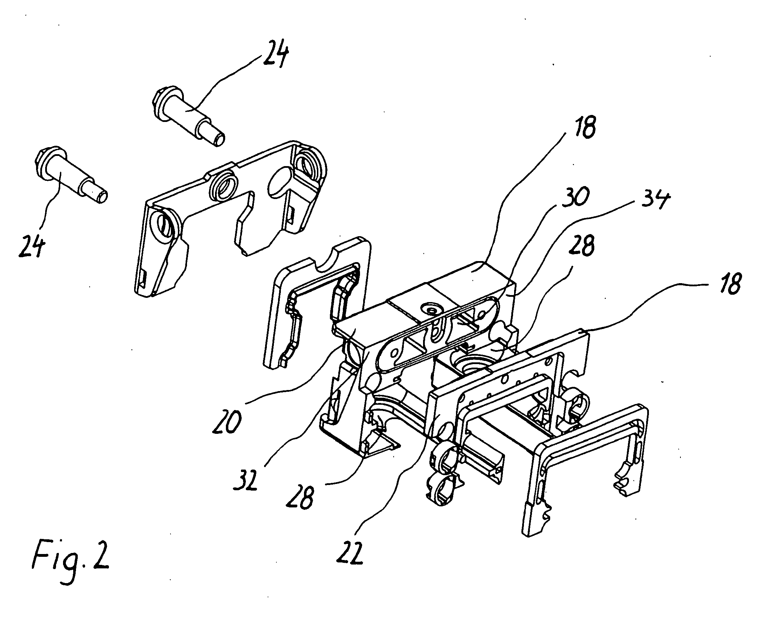

Bei dieser Ausführungsform ist zu berücksichtigen, dass die Führungsbauteile für die Wälzkörper durchaus auch mehrteilig aufgebaut sein können, wie dies beispielsweise aus der EP 0 971 140 A1 bekannt ist. Die entsprechende Linearbewegungsvorrichtung in Form einer Kugelschienenführung ist in den beigefügten Figuren 1 und 2 dargestellt. Die Linearbewegungsvorrichtung 10 besteht aus einer Stange 12 und einem Läufer 14. Der Läufer 14 besteht aus einem Tragkörper 16 und Führungsbauteilen 18 für die nicht dargestellten Wälzkörper und zwar einer Kopfplatte 20 und einer Umlenkplatte 22. Die Kopfplatte 20 und die Umlenkplatte 22 werden ineinander gesteckt und gemeinsam mit Schrauben 24 am Tragkörper 16 befestigt. Die Wälzkörper stützen sich am Tragkörper 16 und an der Stange 12 lastübertragend ab, so dass der Läufer entlang der Stange 12 linear beweglich geführt ist. An der Stange 12 sind hierfür Laufbahnen 26 vorgesehen, die komplementär zu den nicht dargestellten Laufbahnen am Tragkörper 16 ausgeführt sind. In der Kopfplatte 20 sind Umlenkkanäle 28 vorgesehen, die von der Umlenkplatte 22 nach innen begrenzt werden. Die Umlenkkanäle 28 sind Teil eines endlosen Umlaufkanals in dem die Wälzkörper umlaufen.

Das RFID-Tag wird erfindungsgemäß in dem ohnehin vorhandenen Hohlraum 30 der Kopfplatte 20 angeordnet und befindet sich somit zwischen dem wenigstens einen Führungsbauteil 18, nämlich der Kopfplatte 20, und dem Tragkörper 16 und ist von außen her nicht zugänglich. Der Hohlraum 30 wird aber nur mittelbar vom Tragkörper 16 verschlossen, da zwischen dem Tragkörper 16 und der Kopfplatte 20 die Umlenkplatte 22 angeordnet ist.

Gemäß einer weiteren Ausführungsform kann vorgesehen sein, dass das Führungsbauteil aus Kunststoff besteht, wobei das RFID-Tag in das Führungsbauteil eingegossen ist. Diese Ausführungsform ist nützlich, wenn das RFID-Tag auch zum Schutz gegen Produktfälschungen eingesetzt werden soll, wie dies grundsätzlich bekannt ist. Bei Linearbewegungsvorrichtungen sind Produktfälschungen ein Problem, da diese in unterschiedlichen Genauigkeitsklassen angeboten werden, die sich von außen nicht unterscheiden aber einen erheblich unterschiedlichen Preis aufweisen. Es ist daher wichtig, dass die Information über die Genauigkeitsklasse einer Linearbewegungsvorrichtung unveränderbar und untrennbar mit dieser verbunden ist. Dieses Ziel lässt sich mit der beschriebenen Ausführungsform erreichen, denn das Tag lässt sich dann nur unter Zerstörung der Führungsbauteile entfernen. Darüber hinaus wird das Auffinden des Tags durch einen Produktfälscher erheblich erschwert. Bei einer Kugelschienenführung gemäß Fig. 1 und 2 ist das RFID-Tag erfindungsgemäß in einem Eckbereich 32 der Kopfplatte 20 eingegossen.

Aufgrund des geringen Preises eines RFID-Tags ist es sinnvoll, alle Führungsteile mit einem RFID-Tag zu kennzeichnen, wodurch Produktfälschungen weiter erschwert werden. Diese Ausführungsform hat überdies den Vorteil, dass man nach der Montage der Linearbewegungsvorrichtung automatisiert prüfen kann, ob die korrekten Bauteile zusammengesetzt wurden. Dies ist insbesondere dann sinnvoll, wenn die Führungsbauteile in unterschiedlichen Toleranzklassen hergestellt werden, die leicht verwechselt werden können. Zur Kontrolle muss die Linearbewegungsvorrichtung nur in den Erfassungsbereich eines entsprechenden RFID-Tag-Lesegeräts gebracht werden. Anschließend kann ein Computer, der mit dem Lesegerät verbunden ist, automatisiert die verschiedenen Bauteile, die gemäß einer Fertigungsstückliste vorgesehen sind, abfragen und auf Vollständigkeit und korrekte Auswahl hin überprüfen.

Um auch den Tragkörper gegen Fälschungen zu schützen, kann daran gedacht sei, das Führungsbauteil mit dem eingegossenen RFID-Tag durch Umspritzen des Tragkörpers herzustellen und somit fest mit diesem zu verbinden. Somit kann das Tag nur unter Zerstörung des Tragköpers entfernt werden, wodurch die Linearbewegungsvorrichtung im Wesentlichen wertlos würde. Das Umspritzen einer Linearbewegungsführung ohne RFID-Tag ist grundsätzlich aus der US 3,971,264 bekannt.

Weiter kann das RFID-Tag aus einer elektronischen Schaltung und einer Antenne bestehen, wobei die Antenne mit einem Druckverfahren unmittelbar auf das Führungsbauteil aufgebracht ist. Durch diese Ausgestaltung kann bei einem RFID-Tag, das beispielsweise entsprechend der US 6,424,263 B1 aufgebaut ist, auf die Trägerfolie verzichtet werden. Darüber hinaus kann die Antenne einfach auf jede beliebige Fügefläche des Führungsbauteils aufgebracht werden ohne eine gesonderte Aufnahmeausnehmung vorzusehen, da sie in Dickenrichtung nahezu keinen Platz benötigt. Bei der Linearführung gemäß Fig. 1 und 2 wird die Antenne erfindungsgemäß auf die Fügefläche 34 aufgedruckt, da diese für das Drucken besonders gut zugänglich ist. Darüber hinaus wird die Antenne an dieser Stelle von der Umlenkplatte 22 aus Gummi zur Umgebung hin besonders gut abgedichtet. Falls die elektronische Schaltung als Siliziumchip ausgeführt ist, wird in der Umlenkplatte 22 eine angepasste Ausnehmung für diesen vorgesehen.

Bei einer bevorzugten Ausführungsform besteht die elektronische Schaltung des RFID-Tags aus organischen Halbleitern und ist mit einem Druckverfahren unmittelbar auf das Führungsbauteil aufgebracht. Die Antenne und die elektronische Schaltung können somit gleichzeitig auf das Führungsbauteil aufgebracht werden. Eine aufwändige Verdrahtung zwischen der Antenne und einer konventionellen elektronischen Schaltung in Form eines Siliziumchips kann entfallen. Bei der Linearführung gemäß Fig. 1 und 2 wird die elektronische Schaltung erfindungsgemäß benachbart zur Antenne auf die Fügefläche 34 aufgedruckt.

Weiter kann das RFID-Tag einen Speicher und eine Datenverarbeitungseinheit umfassen, wobei Beanspruchungsinformation von außen drahtlos in den Speicher übertragbar sind und wobei die Datenverarbeitungseinheit aus den Beanspruchungsinformationen die zu erwartende Restlebensdauer der Linearbewegungsvorrichtung berechnen und drahtlos nach außen übertragen kann. Aus der DE 34 07 716 C2 ist grundsätzlich bekannt, den Verschleißzustand eines Verschleißteils im Betrieb rechnerisch fortlaufend zu ermitteln, um den bevorstehenden Ausfall des Verschleißteils rechtzeitig anzuzeigen. Dieses Verfahren ist bei Linearbewegungsvorrichtungen ebenfalls anwendbar, da auch diese einem Verschleiß unterliegen.

Aufgrund der Vielzahl von unterschiedlichen Linearbewegungsvorrichtungen und der damit einhergehenden unterschiedlichen Berechnungsverfahren ist es für den Anwender derselben nicht zumutbar, die Verschleißberechnung in die Steuerung der übergeordneten Maschine einzuprogrammieren. Es ist vielmehr wünschenswert, wenn die Linearbewegungsvorrichtung die entsprechende Verschleißvorhersage selbst durchführt. Diese Aufgabe wird von einer Linearbewegungsvorrichtung mit den oben beschrieben Merkmalen gelöst.

Die übergeordnete Maschine muss somit nur die notwendigen Beanspruchungsinformationen drahtlos an die RFID-Tags übertragen und kann anschließend die Restlebensdauer bzw. den Verschleißzustand ebenfalls drahtlos abfragen. Dabei ist für alle Linearbewegungsvorrichtungen in einer überordneten Maschine nur eine RFID-Tag Sende-/Empfangseinrichtung notwendig.

Die notwendigen Beanspruchungsinformationen stehen in der Steuerung der übergeordneten Maschine ohnehin zur Verfügung. Bei einem Kugelgewindetrieb sind dies beispielsweise das Antriebsdrehmoment und die Anzahl der Spindelumdrehungen. Das Antriebsmoment kann beispielsweise aus dem Antriebsstrom des Elektromotors, der die Spindel antreibt abgeleitet werden, wobei der Antriebsstrom üblicherweise von der Steuerung der übergeordneten Maschine geregelt wird und damit bekannt ist. Die Anzahl der Spindelumdrehungen kann wiederum mit Hilfe der Wegmesssysteme, die an die Steuerung der übergeordneten Maschine angeschlossen sind, ermittelt werden. Die Lebensdauerberechung kann anhand dieser Daten beispielsweise entsprechend den Angaben in dem Katalog "Rexroth Kugelgewindetriebe" (R310DE 3301; Ausgabe 2004.11; Seite 118 bis 121) der Anmelderin von der Datenverarbeitungseinheit des RFID-Tags durchgeführt werden.

Die Zuverlässigkeit des ermittelten Restlebensdauerwertes kann dadurch verbessert werden, dass in der Linearbewegungsvorrichtung ein Sensor vorgesehen ist, der Schwingungen des Läufers erfasst, wobei die Schwingungsinformationen bei der Berechnung der Restlebensdauer berücksichtigt werden. Aus den Schwingungen des Läufers insbesondere denen des Tragkörpers kann eine Aussage über den bevorstehenden Ausfall der Linearbewegungsvorrichtung getroffen werden, da dem Ausfall oft Beschädigungen an den Wälzkörperlaufbahnen voraus gehen. Beim Abrollen der Wälzkörper über die beschädigten Laufbahnen entstehen wiederum vermehrt Schwingungen im Tragkörper. Als Schwingungssensor kommt bei einer Kugelschienführung gemäß Fig. 1 und 2 beispielsweise ein Piezokristall in Betracht. Bestimmte Piezokristalle, die beispielsweise auch in Lautsprechern verwendet werden, geben eine elektrische Spannung ab, wenn sie verbogen werden. Deshalb ist es vorteilhaft, einen derartigen Piezokristall am Mittelsteg 36 des Tragkörpers 16 vorzugsweise durch Aufkleben anzubringen, da der Mittelsteg der Abschnitt des Tragkörpers ist, der am stärksten auf Biegung beansprucht wird. Die elektrische Spannung, die der Piezokristall während des Betriebs der Linearbewegungsvorrichtung abgibt, ist somit ein Maß für die Schwingungsbewegungen des Tragkörpers und kann vom RFID-Tag entsprechend ausgewertet werden, um in Verbindung mit der oben beschrieben Berechnung die zu erwartende Restlebensdauer der Linearbewegungsvorrichtung zu ermitteln. Bei dieser Ausführungsform ist es vorteilhaft, wenn das RFID-Tag permanent z.B. mittels einer Batterie mit Energie versorgt wird, damit die auftretenden Schwingungen zu jeder beliebigen Zeit ausgewertet werden können und nicht nur während des Abfragens des RFID-Tags.

Gemäß einer weiteren Ausführungsform kann die Linearbewegungsvorrichtung ein Wälzkörpergewindetrieb sein, wobei in dem RFID-Tag der tatsächliche Zusammenhang zwischen Drehstellung und Verfahrweg des Wälzkörpergewindetriebs gespeichert ist und wobei dieser Zusammenhang von der Steuerung einer übergeordneten Maschine bei der Lagesteuerung des Läufers berücksichtigt wird. Aus der DE 16 38 032 C3 oder der US 5,237,509 ist bekannt, die Ungenauigkeit eines Gewindetriebs einer Maschine bei der Lageregelung mittels einer Korrekturtabelle zu berücksichtigen. Somit kann anstatt eines Linearwegmesssystems ein kostengünstigerer Drehgeber verwendet werden, ohne dass die Positioniergenauigkeit der Maschine leidet. Die Korrekturtabelle, die jeder Drehstellung der Gewindespindel des Wälzkörpergewindetriebs den tatsächlichen Verfahrweg des Läufers zuordnet, ist hierbei in der Maschinensteuerung gespeichert. Dies hat den Nachteil, dass bei einem Austausch des Wälzkörpergewindetriebs, beispielsweise im Rahmen einer Reparatur der übergeordneten Maschine, die entsprechende Korrekturtabelle neu ermittelt und in die Maschinensteuerung eingegeben werden muss. Dies ist im Rahmen einer Reparatur nur schwer zu bewerkstelligen und in jedem Fall sehr aufwändig. Einfacher ist es, wenn der Hersteller des Wälzkörpergewindetriebs die entsprechenden Informationen bereits bei der Herstellung desselben ermittelt und anschließend an den Kunden weitergibt. Bei der oben beschriebenen Ausführungsform ist sichergestellt, dass diese Informationen unverwechselbar und unverlierbar mit der Spindel verbunden sind, so dass die Steuerung der übergeordneten Maschine immer mit den korrekten Daten arbeitet. Hierbei ist anzumerken, dass eine mögliche Verwechslung erst beim Betrieb der übergeordneten Maschine beispielsweise durch fehlerhaft produzierte Teile erkannt werden kann.

### Bezugszeichenliste

- 10: Linearbewegungsvorrichtung
- 12: Stange
- 14: Läufer
- 16: Tragkörper
- 18: Führungsbauteil
- 20: Kopfplatte
- 22: Umlenkplatte
- 24: Schraube
- 26: Laufbahn
- 28: Umlenkkanal
- 30: Hohlraum
- 32: Eckbereich
- 34: Fügefläche
- 36: Mittelsteg

## Patentansprüche

1. Linearbewegungsvorrichtung (10) bestehend aus einer Stange (12) und einem Läufer (14), der an der Stange mit wenigstens einem Wälzkörperumlauf beweglich gelagert ist, wobei der Läufer (14) einen elektrisch leitenden Tragkörper (16), an dem sich die Wälzkörper lastübertragend abstützen, und wenigstens ein elektrisch nicht leitendes Führungsbauteil (18) für die unbelasteten Wälzkörper umfasst,
**dadurch gekennzeichnet, dass** das Führungsbauteil (18) mit einem RFID-Tag versehen ist, wobei das RFID-Tag von außen her nicht zugänglich ist.

2. Linearbewegungsvorrichtung nach Anspruch 1,
**dadurch gekennzeichnet, dass** das RFID-Tag zwischen dem Führungsbauteil (18) und dem Tragkörper (16) angeordnet ist.

3. Linearbewegungsvorrichtung nach Anspruch 1,
**dadurch gekennzeichnet, dass** das Führungsbauteil (18) aus Kunststoff besteht, wobei das RFID-Tag in das Führungsbauteil (18) eingegossen ist.

4. Linearbewegungsvorrichtung nach Anspruch 3,
**dadurch gekennzeichnet, dass** das Führungsbauteil (18) durch Umspritzen des Tragkörpers (16) fest mit diesem verbunden ist.

5. Linearbewegungsvorrichtung nach Anspruch 1,
**dadurch gekennzeichnet, dass** das RFID-Tag aus einer elektronischen Schaltung und einer Antenne besteht, wobei die Antenne mit einem Druckverfahren unmittelbar auf das Führungsbauteil (18) aufgebracht ist.

6. Linearbewegungsvorrichtung nach Anspruch 5,
**dadurch gekennzeichnet, dass** die elektronische Schaltung aus organischen Halbleitern besteht und mit einem Druckverfahren unmittelbar auf das Führungsbauteil (18) aufgebracht ist.

7. Linearbewegungsvorrichtung nach einem der Ansprüche 3 bis 6,
**dadurch gekennzeichnet, dass** alle Führungsbauteile mit einem RFID-Tag versehen sind.

8. Linearbewegungsvorrichtung nach einem der vorherigen Ansprüche,
**dadurch gekennzeichnet, dass** das RFID-Tag einen Speicher und eine Datenverarbeitungseinheit umfasst, wobei Beanspruchungsinformation von außen drahtlos in den Speicher übertragbar sind und wobei die Datenverarbeitungseinheit dazu eingerichtet ist, aus den Beanspruchungsinformationen die zu erwartende Restlebensdauer der Linearbewegungsvorrichtung (10) zu berechnen, und wobei das Ergebnis drahtlos nach außen übertragbar ist.

9. Linearbewegungsvorrichtung nach Anspruch 8,
**dadurch gekennzeichnet, dass** in der Linearbewegungsvorrichtung (10) ein Sensor vorgesehen ist, der Schwingungen des Läufers erfasst, wobei die Schwingungsinformationen bei der Berechnung der Restlebensdauer berücksichtigt werden.

10. Linearbewegungsvorrichtung nach Anspruch 9,
**dadurch gekennzeichnet, dass** das RFID-Tag permanent mit Energie versorgt wird.

11. Linearbewegungsvorrichtung nach einem der vorherigen Ansprüche zur Verwendung in einer übergeordneten Maschine,
**dadurch gekennzeichnet, dass** die Linearbewegungsvorrichtung (10) ein Wälzkörpergewindetrieb ist, wobei in dem RFID-Tag der tatsächliche Zusammenhang zwischen Drehstellung und Verfahrweg des Wälzkörpergewindetriebs gespeichert ist und wobei dieser Zusammenhang von der Steuerung der übergeordneten Maschine bei der Lagesteuerung des Läufers berücksichtigt wird.

## Claims

1. Linear motion device (10) comprising a bar (12) and a runner (14), which is movably mounted on the bar with at least one surrounding rolling-element track, the runner (14) comprising an electrically conducting supporting element (16), on which the rolling elements are supported in a load-transferring manner, and at least one electrically non-conducting guiding component (18) for the non-loaded rolling elements, **characterized in that** the guiding component (18) is provided with an RFID tag, the RFID tag not being accessible from the outside.

2. Linear motion device according to Claim 1, **characterized in that** the RFID tag is arranged between the guiding component (18) and the supporting element (16) .

3. Linear motion device according to Claim 1, **characterized in that** the guiding component (18) consists of plastic, the RFID tag being moulded into the guiding component (18).

4. Linear motion device according to Claim 3, **characterized in that** the guiding component (18) is firmly connected to the supporting element (16) by encapsulation of the latter.

5. Linear motion device according to Claim 1, **characterized in that** the RFID tag comprises an electronic circuit and an aerial, the aerial being applied directly to the guiding component (18) by a printing process.

6. Linear motion device according to Claim 5, **characterized in that** the electronic circuit comprises organic semiconductors and is applied directly to the guiding component (18) by a printing process.

7. Linear motion device according to one of Claims 3 to 6, **characterized in that** all the guiding components are provided with an RFID tag.

8. Linear motion device according to one of the preceding claims, **characterized in that** the RFID tag comprises a memory and a data processing unit, loading information being wirelessly transmittable from the outside into the memory and the data processing unit being set up for the purpose of calculating from the loading information the likely remaining service life of the linear motion device (10), and the result being wirelessly transmittable to the outside.

9. Linear motion device according to Claim 8, **characterized in that** a sensor which senses vibrations of the runner is provided in the linear motion device (10), the vibrational information being taken into account in the calculation of the remaining service life.

10. Linear motion device according to Claim 9, **characterized in that** the RFID tag is permanently supplied with energy.

11. Linear motion device according to one of the preceding claims for use in a higher-level machine, **characterized in that** the linear motion device (10) is a rolling element screw drive, the actual relationship between the rotational position and the displacement of the rolling element screw drive being stored in the RFID tag and this relationship being taken into account by the controller of the higher-level machine in the positional control of the runner.

## Revendications

1. Dispositif de mouvement linéaire (10) comprenant une barre (12) et un chariot (14) monté mobile sur la barre avec au moins un palier à rouleaux circulants, le chariot (14) comprenant un support (16) électri-coconducteur sur lequel s'appuient les rouleaux pour transmettre des charges, et au moins un composant de guidage (18) non électrico conducteur pour les rouleaux non chargés,
**caractérisé en ce que**
le composant de guidage (18) est muni d'un module RFID, le module RFID n'étant pas accessible de l'extérieur.

2. Dispositif de mouvement linéaire selon la revendication 1,
**caractérisé en ce que**
le module RFID est disposé entre le composant de guidage (18) et le support (16) .

3. Dispositif de mouvement linéaire selon la revendication 1,
**caractérisé en ce que**
le composant de guidage (18) est en matière plastique, le module RFID étant coulé dans le composant de guidage (18).

4. Dispositif de mouvement linéaire selon la revendication 3,
**caractérisé en ce que**
le composant de guidage (18) est relié de façon fixe au support (16) par enrobage de celui-ci.

5. Dispositif de mouvement linéaire selon la revendication 1,
**caractérisé en ce que**
le module RFID est composé d'un circuit électronique et d'une antenne, l'antenne étant appliquée directement sur le composant de guidage (18) selon un procédé d'impression.

6. Dispositif de mouvement linéaire selon la revendication 5,
**caractérisé en ce que**
le circuit électronique est composé de semi-conducteurs organiques et appliqué directement sur le composant de guidage (18) selon un procédé d'impression.

7. Dispositif de mouvement linéaire selon l'une quelconque des revendications 3 à 6,
**caractérisé en ce que**
tous les composants de guidage sont munis d'un module RFID.

8. Dispositif de mouvement linéaire selon l'une quelconque des revendications précédentes,
**caractérisé en ce que**
le module RFID comprend une mémoire et une unité de traitement de données, l'information de charge pouvant être transmise sans fil de l'extérieur dans la mémoire, et l'unité de traitement de données étant installée pour calculer à partir des informations de charge la durée de vie prévisible du dispositif de mouvement linéaire (10), et le résultat pouvant être transmis sans fil vers l'extérieur.

9. Dispositif de mouvement linéaire selon la revendication 8,
**caractérisé en ce que**
le dispositif de mouvement linéaire (10) comprend un capteur qui détecte des oscillations du chariot, les informations d'oscillation étant prises en compte dans le calcul de la durée de vie prévisible.

10. Dispositif de mouvement linéaire selon la revendication 9,
**caractérisé en ce que**
le module RFID est alimenté en énergie en permanence.

11. Dispositif de mouvement linéaire selon l'une quelconque des revendications précédentes pour l'utilisation dans une machine pilote,
**caractérisé en ce que**
le dispositif de mouvement linéaire (10) est un mécanisme broche filetée à rouleaux, la relation réelle entre la position de rotation et la course du mécanisme broche filetée à rouleaux étant enregistrée dans le module RFID et cette relation étant prise en compte par la commande de la machine pilote lors de la commande de la position du chariot.
